# EUROPÄISCHE PATENTSCHRIFT

(11) **EP 4 150 749 B1**
(45) Veröffentlichungstag und Bekanntmachung des Hinweises auf die Patenterteilung: **04.11.2026**
(21) Anmeldenummer: 22700915.6
(22) Anmeldetag: 10.01.2022
(51) Int. Cl.: H02K 41/03

(54) **FLÄCHENMOTOR UND VERFAHREN ZUM ANSTEUERN EINES FLÄCHENMOTORS**
PLANAR MOTOR AND METHOD FOR ACTUATING A PLANAR MOTOR
MOTEUR À PLAT ET PROCÉDÉ POUR ACTIONNER UN MOTEUR À PLAT

(30) Priorität: 08.01.2021 DE 102021100200
(43) Veröffentlichungstag der Anmeldung: 22.03.2023
(73) Patentinhaber: Gil, Sebastian, 5000 Aarau (CH)
(72) Erfinder: BERGMANN, Lars B., 64380 Roßdorf (DE); ROTH, Stepfan, 10245 Berlin (DE)
(74) Vertreter: Köllner, Malte
(86) Internationale Anmeldenummer: PCT/EP2022/050361
(87) Internationale Veröffentlichungsnummer: WO 2022/148872

(56) Entgegenhaltungen:
- EP-A2- 0 871 284
- JP-A- 2014 003 211
- US-A1- 2005 116 548
- US-A1- 2012 300 186
- US-A1- 2012 328 836
- US-A1- 2013 258 307
- US-A1- 2017 179 806
- US-A1- 2020 303 997

## Beschreibung

### Gebiet der Erfindung

Die Erfindung betrifft einen Flächenmotor. Derartige Vorrichtungen dienen vorwiegend zum Bewegen von Lasten in mehr als einer Dimension bzw. Richtung. Sie werden z.B. in Positioniersystemen, u.a. bei Photolithographieanlagen für die Chip-Herstellung, verwendet, können aber auch in größerem Maßstab, z.B. in Lagersystemen o.Ä. eingesetzt werden.

### Stand der Technik

Ein Flächenmotor ist z.B. in EP 1 443 632 A2 beschrieben. Eine fortschrittlichere Ausführung, die z.B. für Logistiksysteme geeignet ist, kann der Druckschrift WO 2008/148513 A1 entnommen werden. Die bekannten derartigen Systeme zeichnen sich alle durch hohe Anschaffungs- und insbesondere Betriebskosten aus, teilweise bedingt durch einen hohen Stromverbrauch.

Ein Flächenmotor, bei dem Elektromagnete in Antriebseinheiten gruppiert sind, wobei die in einer Antriebseinheit gruppierten Elektromagnete eine Bewegung einer Transporteinheit mit Permanentmagneten in dieselbe Richtung bewirken, ist beispielsweise in US 2012/0300186 A1 beschrieben. Dieser Flächenmotor ist explizit für den Einsatz in einer Photolithographieanlage konfiguriert, d.h. in einem System mit sehr begrenzter Ausdehnung, bei dem der Energieverbrauch von untergeordneter Bedeutung ist. Insbesondere eignet er sich nicht für den Einsatz in größer dimensionierten Systemen, z.B. einem Logistiksystem.

Vor allem, wenn die Anordnung der Antriebselemente, beispielsweise Elektromagnete, nicht völlig symmetrisch bzw. nicht optimal auf die Anordnung der Magnete an den beweglichen Komponenten des Flächenmotors abgestimmt ist, werden bei der Bewegung ständig Korrekturen der Bewegungsrichtung erforderlich. Es wird also immer wieder nachgesteuert, was den Stromverbrauch zusätzlich in die Höhe treibt. Das Dokument JP2014003211A bezieht sich ebenfalls auf einen bekannten Flächenmotor.

### Aufgabe

Aufgabe der Erfindung ist es, einen Flächenmotor sowie ein Verfahren zum Ansteuern eines Flächenmotors mit gesteigerter Effizienz und reduzierten Kosten anzugeben.

### Lösung

Diese Aufgabe wird durch die Gegenstände der unabhängigen Ansprüche gelöst. Vorteilhafte Weiterbildungen der Gegenstände der unabhängigen Ansprüche sind in den Unteransprüchen gekennzeichnet. Der Wortlaut sämtlicher Ansprüche wird hiermit durch Bezugnahme zum Inhalt dieser Beschreibung gemacht.

Die Verwendung der Einzahl soll die Mehrzahl nicht ausschließen, was auch im umgekehrten Sinn zu gelten hat, soweit nichts Gegenteiliges offenbart ist.

Zur Lösung der Aufgabe wird ein Flächenmotor vorgeschlagen, der mindestens eine Transporteinheit mit Permanentmagneten hat. Die Permanentmagnete überdecken eine vorgegebene Fläche der Transporteinheit, wobei überdecken bedeutet, dass die vorgegebene Fläche im Wesentlichen bedeckt wird - zwischen den Permanentmagneten können bzw. sollten durchaus Lücken bzw. Abstände vorhanden sein. Die Permanentmagnete sind dabei typischerweise so an der Transporteinheit befestigt, dass jeweils entweder der Nordpol oben und der Südpol unten ist, oder umgekehrt. Diese Orientierung kann auch alternierend auftreten, oder in irgendeiner anderen Zusammenstellung. Die Transporteinheit weist eine vorgegebene Länge und eine vorgegebene Breite auf.

Der Flächenmotor weist eine Mehrzahl von Elektromagneten auf, wobei die Elektromagnete derart ausgebildet und angeordnet sind, dass sie die Transporteinheit in x- und y-Richtung bewegen können. Dabei sind Bewegungen in x- und y-Richtung lediglich die bevorzugten Bewegungsrichtungen. Möglich sind aber auch Diagonalfahrten und auch Rotationen.

Dabei sind jeweils eine feste Anzahl Elektromagnete in Antriebseinheiten gruppiert. Die feste Anzahl beträgt dabei mindestens drei und höchstens achtzehn, wobei die in einer Antriebseinheit gruppierten Elektromagnete eine Bewegung der Transporteinheit in dieselbe Richtung bewirken. Diese Antriebseinheiten weisen eine vorgegebene Länge und eine vorgegebene Breite auf und können beispielsweise in einem Raster angeordnet werden.

Die kleinere Dimension von Länge oder Breite der Transporteinheit entspricht mindestens der Summe aus dem Zweifachen der Länge einer Antriebseinheit und dem Zweifachen der Breite einer Antriebseinheit. Bevorzugt wird auch die Summe aus dem Dreifachen der Länge einer Antriebseinheit und dem Dreifachen der Breite einer Antriebseinheit, sowie andere, größere Vielfache davon.

Die Antriebseinheiten sind derart über die Fläche des Flächenmotors verteilt angeordnet, dass sich stets genau zwei Antriebseinheiten, die eine Bewegung in x-Richtung bewirken, und genau zwei Antriebseinheiten, die eine Bewegung in y-Richtung bewirken, unter der von den Permanentmagneten überdeckten, vorgegebenen Fläche der Transporteinheit befinden, wobei sich teilweise unterhalb der vorgegebenen Fläche befindende Antriebseinheiten als entsprechender Bruchteil gezählt werden. Dadurch ist stets eine optimale Beweglichkeit der Transporteinheit sowohl in x- als auch in y-Richtung gewährleistet.

Durch das angegebene Mindestverhältnis zwischen der Breite der Transporteinheit und der Länge der Antriebseinheiten ist eine regelmäßige Anordnung dieser Antriebseinheiten möglich, z.B. jeweils zwei in x-Richtung wirkende und zwei in y-Richtung wirkende Antriebseinheiten in Kreuzform, wobei die Antriebseinheiten die Arme des Kreuzes bilden und die Mitte frei bleibt. Durch die Größe der Transporteinheit, insbesondere ihre Länge, wird dann festgelegt, wie weit diese Kreuze auseinander liegen müssen.

Dadurch, dass die Dichte der Antriebseinheiten - abgestimmt auf die mit Permanentmagneten belegte Fläche der Transporteinheit - begrenzt und gegenüber anderen Flächenmotoren reduziert ist, fallen die Kosten dieses Flächenmotors deutlich niedriger aus. Die Anzahl Elektromagnete sowie die Anzahl von Elektronikelementen zu ihrer Steuerung ist geringer als bei anderen Flächenmotoren, und aufgrund der Abstände ist auch die Wärmeentwicklung niedriger und die Wärmeableitung besser, so dass auf aufwändige Kühlsysteme verzichtet werden kann. Die Anordnung der Elektromagnete in Antriebseinheiten sorgt zudem für größere Übersicht und Modularität. Die angegebene Mindest- / Höchst-Dichte an Antriebseinheiten sorgt trotzdem dafür, dass die Transporteinheit an jeder Position zumindest in einer Richtung bewegt werden kann, bis sich die von Permanentmagneten bedeckte Fläche der Transporteinheit über Antriebseinheiten befindet, die eine Bewegung in die andere Richtung bewirken.

In der Regel sind die Elektromagnete zum Antrieb der Transporteinheit fest im Flächenmotor verbaut, der den Boden einer Transportebene oder eines Lagers bilden kann. Transporteinheiten bewegen sich über diesen Boden, angetrieben von den darin befindlichen Elektromagneten.

Die Aufgabe wird auch gelöst durch einen Flächenmotor, der mindestens eine Transporteinheit mit Permanentmagneten hat. Die Permanentmagnete überdecken eine vorgegebene Fläche der Transporteinheit. Die Permanentmagnete sind dabei typischerweise so an der Transporteinheit befestigt, dass jeweils entweder der Nordpol oben und der Südpol unten ist, oder umgekehrt. Diese Orientierung kann auch alternierend auftreten, oder in irgendeiner anderen Zusammenstellung. Die Transporteinheit weist eine vorgegebene Länge und eine vorgegebene Breite auf.

Der Flächenmotor weist eine Mehrzahl von Elektromagneten auf, wobei die Elektromagnete derart ausgebildet und angeordnet sind, dass sie die Transporteinheit in x- und y-Richtung bewegen können. Dabei sind Bewegungen in x- und y-Richtung lediglich die bevorzugten Bewegungsrichtungen.

Dabei sind jeweils eine feste Anzahl Elektromagnete in Antriebseinheiten gruppiert. Die feste Anzahl beträgt dabei mindestens drei und höchstens achtzehn, wobei die in einer Antriebseinheit gruppierten Elektromagnete eine Bewegung der Transporteinheit in dieselbe Richtung bewirken. Diese Antriebseinheiten weisen eine vorgegebenen Länge und eine vorgegebenen Breite auf und können beispielsweise in einem Raster angeordnet werden.

Die kleinere Dimension von Länge oder Breite der Transporteinheit entspricht mindestens der Summe aus dem Zweifachen der Länge einer Antriebseinheit und dem Zweifachen der Breite einer Antriebseinheit.

Die Antriebseinheiten sind derart über die Fläche des Flächenmotors verteilt angeordnet, dass sich stets genau eine Antriebseinheit, die eine Bewegung in x-Richtung bewirkt, und genau eine Antriebseinheit, die eine Bewegung in y-Richtung bewirkt, unter der von den Permanentmagneten überdeckten, vorgegebenen Fläche der Transporteinheit befindet, wobei sich teilweise unterhalb der vorgegebenen Fläche befindende Antriebseinheiten als entsprechender Bruchteil gezählt werden.

Dadurch ist zumindest eine Beweglichkeit der Transporteinheit sowohl in x- als auch in y-Richtung gewährleistet.

Dadurch, dass die Dichte der Antriebseinheiten - abgestimmt auf die mit Permanentmagneten belegte Fläche der Transporteinheit - begrenzt und gegenüber anderen Flächenmotoren stark reduziert ist, fallen die Kosten dieses Flächenmotors deutlich niedriger aus. Die Anzahl Elektromagnete sowie die Anzahl von Elektronikelementen zu ihrer Steuerung ist geringer als bei anderen Flächenmotoren, und aufgrund der Abstände ist auch die Wärmeentwicklung niedriger und die Wärmeableitung besser, so dass auf aufwändige Kühlsysteme verzichtet werden kann. Die angegebene Mindest- / Höchst-Dichte an Antriebseinheiten sorgt trotzdem dafür, dass die Transporteinheit an jeder Position zumindest in einer Richtung bewegt werden kann, bis sich die von Permanentmagneten bedeckte Fläche der Transporteinheit über Antriebseinheiten befindet, die eine Bewegung in die andere Richtung bewirken.

Die Effektivität der Kraftübertragung zwischen Elektromagneten und Transporteinheit lässt sich verbessern, wenn eine vorgegebene Anzahl von Elektromagneten ein gemeinsames Joch aufweisen. Dies führt auch zu einer weiteren Reduktion des Energieverbrauchs.

Eine weitere Kostenreduktion wird erreicht, wenn die Spulen der Elektromagnete aus kupferkaschiertem Aluminiumdraht bestehen. Typischerweise wird noch eine Isolationsschicht zur elektrischen Isolierung als oberste Schicht aufgebracht. Dabei weist jeder Elektromagnet jeweils mindestens eine Spule auf. Aluminium ist in der Herstellung / im Einkauf deutlich günstiger als Kupfer. Eine Kupferkaschierung ist dennoch vorteilhaft, da Kupfer eine bessere Leitfähigkeit und bessere Kontaktierungseigenschaften als Aluminium aufweist. Dies ist vor allem bei Anschlüssen, Kontakten, Klemmverbindungen usw. wichtig.

Für einen Einsatz im Logistikbereich ist es besonders vorteilhaft, wenn die Transporteinheit entweder
- eine quadratische oder rechteckige Grundfläche und/oder
- eine Grundfläche mit den Abmessungen entsprechend einer Norm für Ladungsträger, insbesondere Paletten und/oder
- insbesondere eine Grundfläche mit den Abmessungen einer Europalette
aufweist. Auf diese Weise kann in einem Lager eine besonders hohe Packungsdichte erreicht werden.

Bei einer vorteilhaften Weiterbildung des Flächenmotors ist die vorgegebene Fläche der Transporteinheit, die von den Permanentmagneten überdeckt wird, kreuzförmig. Auch hierdurch können Kosten gespart werden, denn die von den Permanentmagneten überdeckte Fläche ist kleiner, als wenn die gesamte Unterseite der Transporteinheit überdeckt würde oder ein anderes Muster für die Anordnung der Permanentmagnete gewählt würde. Dennoch wird in x- und in y-Richtung jeweils ein möglichst langer Bereich mit Permanentmagneten überdeckt, so dass weiterhin eine gute Ansteuerbarkeit der Transporteinheit gegeben ist. Bedingt durch die kreuzförmige Anordnung liegen außerdem in optimaler Weise freie Bereiche vor, die z.B. durch Abstützeinrichtungen für die Transporteinheit belegt werden können.

Prinzipiell müssen die Permanentmagnete an der Transporteinheit eine Überdeckung der Elektromagnete im Flächenmotor garantieren. Es kann anstatt eines Kreuzmusters auch ein H-, Rahmen- oder Parallelbalkenmuster zur Anwendung kommen.

Die Ansteuerbarkeit der Transporteinheit und die Antriebskraft kann weiter verbessert werden, wenn die Permanentmagnete rechteckig und unterbrechungsfrei sind. Dabei sind die langen Seiten der rechteckigen Permanentmagnete jeweils senkrecht zur Richtung der Arme der kreuzförmigen Fläche, die sie überdecken, angeordnet. Grundsätzlich können die Permanentmagnete natürlich auch andere Formen haben, etwa quadratisch oder rund.

Eine optimale Beweglichkeit der Transporteinheit wird dadurch erreicht, dass die Transporteinheit ein Rad- und/oder Rollensystem aufweist, das Bewegungen in jede Richtung ermöglicht. Vorzugsweise ist das Rad- und/oder Rollensystem der Transporteinheiten entweder als
- Multiaxialrollen,
- Kugelrollen,
- Allseitenräder,
- Mecanum-Räder oder
- Lenkrollen
ausgebildet. All diese Systeme ermöglichen Bewegungen in jede Richtung. Mit Ausnahme der Lenkrollen sind bei den sonstigen genannten Varianten insbesondere auch Richtungsänderungen ohne zusätzlichen Widerstand möglich. Multiaxialrollen, deren Aufbau weiter unten erläutert wird, sind besonders bevorzugt, da sie einfacher aufgebaut sind als Allseitenräder oder Mecanum-Räder und außerdem die vielfach als unangenehm empfundene Geräuschentwicklung, die bei einigen der genannten Varianten auftreten kann, vermeiden.

Kostengünstig und dabei genau gestaltet sich die Positionsbestimmung der Transporteinheit, wenn der Flächenmotor Sensoren zum Detektieren der Position der Transporteinheit aufweist. Diese Sensoren sind als Hall-Sensoren oder als induktive Näherungsschalter ausgebildet. Dabei kann genutzt werden, dass Hall-Sensoren Magnetfelder messen, insbesondere das Magnetfeld der Permanentmagnete der Transporteinheit. Noch etwas kostengünstiger lässt sich die Positionsbestimmung der Transporteinheit mit induktiven Näherungsschaltern erreichen.

Insbesondere wird bevorzugt, dass die Sensoren derart über die Fläche des Flächenmotors verteilt angeordnet sind, dass sich stets mindestens ein Sensor unter der von den Permanentmagneten überdeckten, vorgegebenen Fläche der Transporteinheit befindet. Damit kann die Position der Transporteinheit ermittelt werden.

Befinden sich stets zwei Sensoren unter der von den Permanentmagneten überdeckten, vorgegebenen Fläche der Transporteinheit, kann neben der Position auch die Ausrichtung der Transporteinheit ermittelt werden.

Ganz besonders wird bevorzugt, dass die Sensoren derart über die Fläche des Flächenmotors verteilt angeordnet sind, dass sich stets mindestens drei Sensoren unter der von den Permanentmagneten überdeckten, vorgegebenen Fläche der Transporteinheit befinden. Dies erhöht die Genauigkeit der Positions- und Ausrichtungsbestimmung der Transporteinheit weiter.

Für das Anfahrverhalten des Flächenmotors ist es besonders vorteilhaft, wenn die feste Anzahl Elektromagnete, die in einer Antriebseinheit gruppiert sind, ein ganzzahliges Vielfaches von drei ist. Sofern die Abstände zwischen den Elektromagneten und die Abstände zwischen den Permanentmagneten der Transporteinheit aufeinander abgestimmt sind, ist es dann problemlos möglich, mit den Elektromagneten von einer Antriebseinheit die Transporteinheit zu beschleunigen, und zwar sowohl vorwärts als auch rückwärts.

Besonders bevorzugt wird, dass in einer Antriebseinheit genau sechs Elektromagnete für eine Bewegungsrichtung gruppiert sind. Dies stellt einen optimalen Kompromiss zwischen gutem Anfahrverhalten und geringer Größe der Antriebseinheit dar und ermöglicht es, in besonders einfacher Weise die weiter oben beschriebene Dichte der Elektromagnete in der Fläche des Linearmotors einzuhalten.

Die Antriebseinheiten sind besonders wirksam, wenn die jeweils in einer Antriebseinheit gruppierten Elektromagnete derart geformt und angeordnet sind, dass ihre größte Ausdehnung senkrecht zur jeweiligen Antriebsrichtung orientiert ist, und wenn sie in dieser Antriebsrichtung hintereinander liegen. Durch die Anordnung senkrecht zur Antriebsrichtung kann die gesamte Länge des jeweiligen Elektromagneten gleichermaßen zur Antriebskraft beitragen, sofern auf der Transporteinheit ein Permanentmagnet als Gegenstück zur Verfügung steht.

Die Antriebseinheiten können besonders kompakt ausgeführt werden, wenn die Elektromagnete einer Antriebseinheit ein gemeinsames Joch aufweisen. Dies ermöglicht auch ein günstigeres Ausrichten der erzeugten Magnetfelder.

Eine optimale Abstimmung der Komponenten aufeinander, die ein besonders gutes Anfahren der Transporteinheit ermöglicht, wird erreicht, wenn die Permanentmagnete, die die vorgegebene Fläche der Transporteinheit überdecken, jeweils in einem Abstand voneinander angeordnet sind, der dem 1,25- bis 1,75-fachen, insbesondere dem 1,5-fachen Abstand der Elektromagnete in einer Antriebseinheit entspricht. Dann ist insbesondere jeder dritte Elektromagnet in einer unter der Transporteinheit befindlichen Antriebseinheit in der optimalen Lage gegenüber einem Permanentmagneten, um eine Beschleunigung in eine Richtung zu bewirken.

Bei einer besonders bevorzugten Weiterbildung des Flächenmotors sind in einer Antriebseinheit genau drei, sechs oder neun Elektromagnete gruppiert, vorzugsweise sechs. Die Länge und/oder die Breite der Transporteinheit entspricht mindestens dem Vierfachen der Länge einer Antriebseinheit. Die Länge der Transporteinheit kann somit auch dem Fünffachen, Sechsfachen, Siebenfachen, Achtfachen usw. der Länge einer Antriebseinheit entsprechen. In diesen Fällen können die Abstände zwischen den Antriebseinheiten entsprechend größer ausfallen, was die Kosten pro Fläche weiter verringert und die oben genannten Vorteile verstärkt.

Der Flächenmotor wird vorzugsweise mit Wechselstrom betrieben. Einerseits würde Gleichstrom zu hohem Aufwand und Wärmeentwicklung führen. Andererseits kann der Wechselstrom zum Ausbilden der Wanderwelle im Flächenmotor genutzt werden, die Voraussetzung für den Antrieb der Transporteinheiten ist. Dafür wird der Wechselstrom mit genau der Frequenz betrieben, die zu der benötigten Geschwindigkeit der Wanderwelle zum Antreiben der Transporteinheit benötigt wird. Zum Ausbilden der benötigten Frequenz werden Umrichter eingesetzt.

Es gibt verschiedene Möglichkeiten, die Anzahl der Umrichter zu begrenzen, um die Kosten des Flächenmotors niedrig zu halten. Die aufwändigste Variante bestünde darin, jede Antriebseinheit mit einem eigenen Umrichter auszustatten. Günster wird es, wenn pro von den Permanentmagneten überdeckten, vorgegebenen Fläche der Transporteinheit stets nur ein Umrichter verbaut wird.

Noch geringer fallen die Kosten aus, wenn bei einem Flächenmotor, wie er weiter oben beschrieben wurde, die Antriebseinheiten in Zeilen und Spalten einer Matrix angeordnet sind, wobei die Antriebseinheiten abhängig davon, ob sie eine Bewegung einer Transporteinheit in x- oder in y-Richtung bewirken, entweder den Zeilen oder den Spalten der Matrix zugeordnet sind. Der Flächenmotor weist dann für jede Zeile und für jede Spalte der Matrix genau einen Umrichter auf. Typisch sind ferner für jede Antriebseinheit Null, zwei oder drei elektronische Schütze und/oder Relais bzw. Null oder zwei analoge Schütze. Die Umrichter bestromen die Antriebseinheiten, wobei alle Antriebseinheiten, die derselben Zeile oder Spalte zugeordnet sind, durch denselben Umrichter bestromt werden.

Hierbei ist insbesondere vorteilhaft, dass die Anzahl der zur Versorgung der Elektromagnete bzw. der Antriebseinheiten benötigten Umrichter lediglich linear mit der Anzahl der Zeilen und Spalten skaliert. Deren Anzahl würde normalerweise also quadratisch mit der Anzahl der Zeilen / Spalten ansteigen. Das soeben beschriebene Verfahren ist also bei Flächenmotoren mit mindestens vier Antriebseinheiten vorteilhaft, und der Vorteil nimmt bei zunehmender Größe der Anlage überproportional zu. Da es sich bei Umrichtern um aufwändige Leistungselektronik-Komponenten handelt, sind sowohl die Anschaffungskosten als auch die Betriebskosten (aufgrund des Stromverbrauchs) reduziert.

Prinzipiell genügen Umrichter auch nur an einer Seite des Flächenmotors. Dies senkt die Kosten weiter, führt jedoch zu Einschränkungen bei der Flexibilität der Steuerung der Transporteinheiten.

Im Folgenden werden einzelne Verfahrensschritte näher beschrieben. Die Schritte müssen nicht notwendigerweise in der angegebenen Reihenfolge durchgeführt werden, und das zu schildernde Verfahren kann auch weitere, nicht genannte Schritte aufweisen.

Die Aufgabe wird ferner gelöst durch ein Verfahren zum Ansteuern eines Flächenmotors. Dieses Verfahren weist die folgenden Schritte auf:
1. Ein Flächenmotor, wie er weiter oben beschrieben wurde, wird bereitgestellt. Insbesondere handelt es sich dabei um einen Flächenmotor, bei dem die Antriebseinheiten abhängig davon, ob sie eine Bewegung der Transporteinheit in x- oder in y-Richtung bewirken, entweder den Zeilen oder den Spalten einer Matrix zugeordnet sind, wobei für jede Zeile und für jede Spalte der Matrix genau ein Umrichter vorhanden ist. Die Antriebseinheiten werden durch die Umrichter bestromt, wobei alle Antriebseinheiten, die derselben Zeile oder Spalte zugeordnet wurden, durch denselben Umrichter versorgt werden.
2. Für jede Antriebseinheit werden drei elektronische Schütze und/oder Relais bereitgestellt.
3. Beim Bewegen der Transporteinheit entlang einer Zeile oder Spalte der Matrix werden die Elektromagnete der jeweils folgenden Antriebseinheit mittels der elektronischen Schütze und/oder Relais derart zugeschaltet, dass eine ruckfreie Übergabe der Transporteinheit von einer Antriebseinheit zur jeweils Folgenden erfolgt.

Hierbei ist insbesondere vorteilhaft, dass die Anzahl der zur Versorgung der Elektromagnete bzw. der Antriebseinheiten benötigten Umrichter lediglich linear mit der Anzahl der Zeilen und Spalten skaliert. Übliche Verfahren zur Ansteuerung von Flächenmotoren benötigen pro Antriebseinheit, also pro Zelle der Matrix (d.h. pro Schnittpunkt von jeweils einer Zeile und einer Spalte) einen oder sogar zwei Umrichter. Deren Anzahl würde normalerweise also quadratisch mit der Anzahl der Zeilen / Spalten ansteigen. Das soeben beschriebene Verfahren ist also bei Flächenmotoren mit mindestens vier Antriebseinheiten vorteilhaft, und der Vorteil nimmt bei zunehmender Größe der Anlage überproportional zu. Da es sich bei Umrichtern um aufwändige Leistungselektronik-Komponenten handelt, sind sowohl die Anschaffungskosten als auch die Betriebskosten (aufgrund des Stromverbrauchs) reduziert.

Weitere Einzelheiten und Merkmale ergeben sich aus der nachfolgenden Beschreibung von bevorzugten Ausführungsbeispielen in Verbindung mit den Figuren. Hierbei können die jeweiligen Merkmale für sich alleine oder zu mehreren in Kombination miteinander verwirklicht sein. Die Möglichkeiten, die Aufgabe zu lösen, sind nicht auf die Ausführungsbeispiele beschränkt. So umfassen beispielsweise Bereichsangaben stets alle - nicht genannten - Zwischenwerte und alle denkbaren Teilintervalle.

Die Ausführungsbeispiele sind in den Figuren schematisch dargestellt. Gleiche Bezugsziffern in den einzelnen Figuren bezeichnen dabei gleiche oder funktionsgleiche bzw. hinsichtlich ihrer Funktionen einander entsprechende Elemente. Im Einzelnen zeigt:
- Fig. 1: eine Ansicht der Unterseite einer Transporteinrichtung eines erfindungsgemäßen Flächenmotors;
- Fig. 2: eine Darstellung einer Multiaxialrolle;
- Fig. 3: eine schematische Darstellung einer möglichen Anordnung von Multiaxialrollen an einer Transporteinheit eines erfindungsgemäßen Flächenmotors;
- Fig. 4: eine beispielhafte Ausführung einer Antriebseinheit mit 6 Elektromagneten;
- Fig. 5: eine mögliche Anordnung von Antriebseinheiten in einem Flächenmotor;
- Fig. 6: eine erfindungsgemäße Anordnung von Antriebseinheiten in Abhängigkeit von der mit Permanentmagneten überdeckten Fläche von rechteckigen Transporteinheiten;
- Fig. 7: eine Anordnung wie in Fig. 6 mit anderen rechteckigen Transporteinheiten;
- Fig. 8: eine Anordnung wie in Fig. 6 mit teils gedrehten rechteckigen Transporteinheiten; und
- Fig. 9: einen Flächenmotor mit nur zwei Antriebseinheiten und den Transporteinheiten.

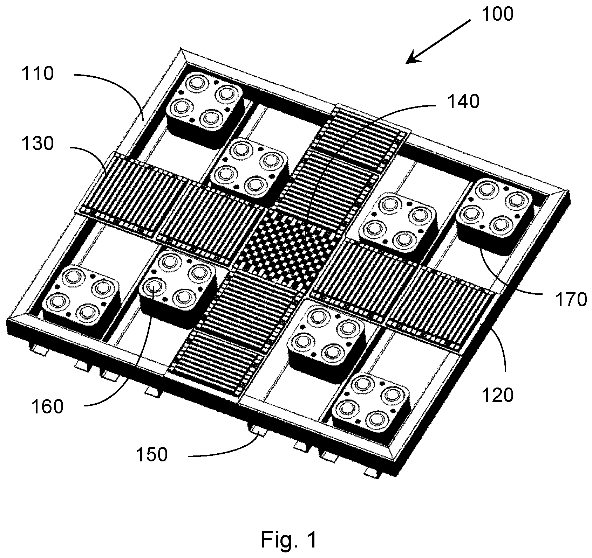

Fig. 1 zeigt eine Ansicht einer Transporteinheit 100 eines erfindungsgemäßen Flächenmotors von unten. Diese Transporteinheit hat eine rechteckige Grundfläche mit einem Rahmen 110. An einer vorgegebenen, kreuzförmigen Fläche 120 sind, mit Ausnahme des Bereichs, in dem sich die Arme der kreuzförmigen Fläche schneiden, streifenförmige Permanentmagnete 130 derart angebracht, dass sie die kreuzförmige Fläche 120 - bis auf kleine Abstände - überdecken. Dabei sind die Permanentmagnete 130 senkrecht zu den jeweiligen Armen der kreuzförmigen Fläche 120 angebracht. Ihr Nord- bzw. Südpol ist in bekannter Weise jeweils nach oben bzw. unten orientiert, vorzugsweise abwechselnd. Im Bereich, in dem sich die Arme der kreuzförmigen Fläche 120 schneiden, sind in diesem Beispiel kleine quadratische Permanentmagnete 140 in einem schachbrettartigen Muster angeordnet. Diese sind aber nicht zwingend erforderlich.

In den Bereichen der Transporteinheit außerhalb der kreuzförmigen Fläche 120 sind bei dieser Transporteinheit an mit dem Rahmen 110 verbundenen Querträgern 150 Kugelrollen 160 in entsprechenden Aufnahmen 170 angeordnet. Diese dienen als Rollensystem, um die Beweglichkeit der Transporteinheit 100 zu gewährleisten.

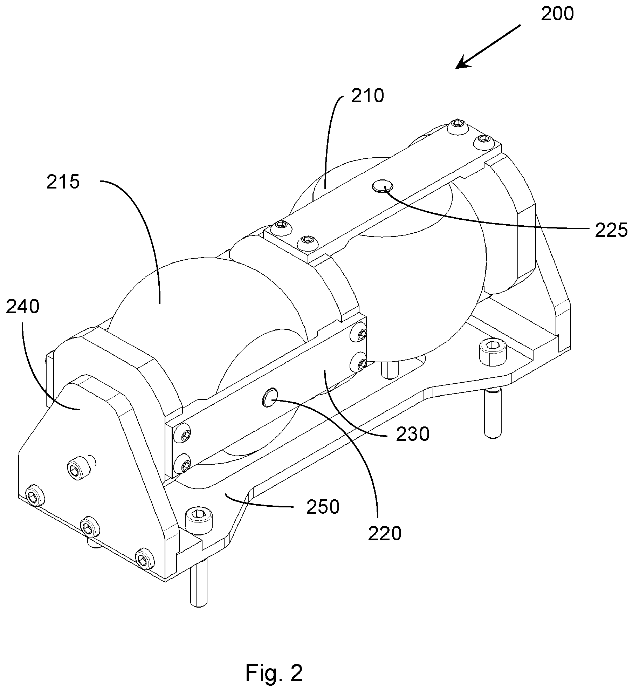

Fig. 2 zeigt eine Multiaxialrolle 200, wie sie bei Transporteinheiten des Flächenmotors als Rollensystem bevorzugt werden. Zu erkennen sind zwei im Wesentlichen kugelig ausgebildete Rollen 210, 215, deren Drehachsen 220, 225 senkrecht aufeinander stehen. Die Kugelform der Rollen ist senkrecht zur jeweiligen Drehachse an beiden Seiten etwas abgeschnitten. Die Rollen 210, 215 sind in einem Rahmen 230 montiert, der seinerseits um eine Mittelachse 240 drehbar ist, die senkrecht zu den beiden Drehachsen 220, 225 der beiden Rollen 210, 215 angeordnet ist. Entscheidend ist, dass die Rollen einen größeren Durchmesser haben, als der Rahmen 230 in seiner Rotationsebene. Der Rahmen 230 ist seinerseits in einer Halterung 250 montiert, mit der die Multiaxialrolle z.B. an einer Transporteinheit befestigt werden kann. Bedingt durch die drei senkrecht zueinander stehenden Drehachsen sind Rotationen in jede Richtung möglich, was seinerseits Bewegungen der Transporteinheit in jede Richtung ermöglicht. Hierzu müssen keine besonderen Widerstände überwunden werden, insbesondere auch nicht bei Richtungsänderungen, wie das bei gewöhnlichen Lenkrollen der Fall ist. Gegenüber Allseitenrädern oder Mecanum-Rädern bieten Multiaxialrollen die Vorteile einer erheblich einfacheren Konstruktion mit weniger Teilen, sind also robuster und weniger störanfällig.

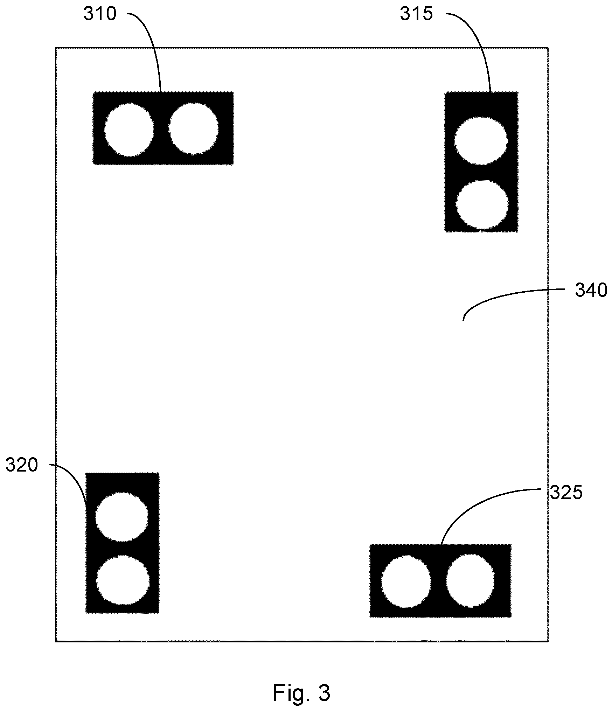

In Fig. 3 ist schematisch dargestellt, wie Multiaxialrollen 310, 315, 320, 325 an einer quadratischen Transporteinheit 340 angeordnet sein können. Diese Anordnung ist für Bewegungen in jede Richtung möglichst symmetrisch ausgeführt. Es sind aber selbstverständlich auch andere Anordnungen denkbar.

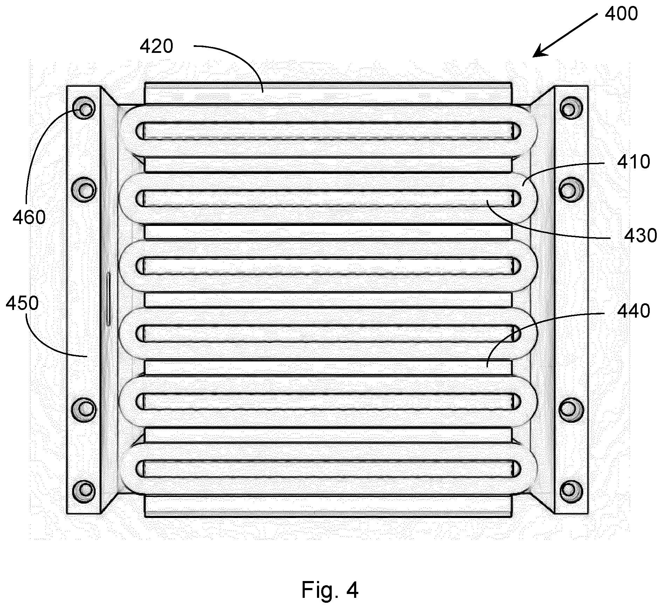

Fig. 4 zeigt eine Antriebseinheit 400, in der sechs Elektromagnete mit Spulen 410 gruppiert sind. Die Elektromagnete teilen sich alle ein gemeinsames Joch 420. Dieses weist neben den Kernen 430 der Spulen 410 auch zusätzliche Elemente 440 zwischen den Spulen bzw. außerhalb der Spulen auf. Diese sind aber nicht notwendig und können in alternativen Ausführungsformen entfallen. Die Elektromagnete und das Joch sind in einem gemeinsamen Rahmen 450 angeordnet, der beispielsweise Befestigungsmittel 460 (Löcher für Verschraubungen) und Stromanschlüsse aufweisen kann.

Der Rahmen 450 ist typischerweise aus Aluminium oder Eisen. Er könnte aber auch Wegfallen oder aus anderen Materialien wie Polymeren bestehen. Der Rahmen fixiert die Elektromagnete und Teile der Verkabelung und der elektronischen Komponenten und verbindet diese mit der Bodenstruktur.

Die Elektromagnete sind länglich geformt und hintereinander senkrecht zu der Richtung angeordnet, in die diese Antriebseinheit eine Transporteinheit bewegen kann. Sofern auf der Transporteinheit entsprechende Permanentmagnete als Gegenstücke vorhanden sind, kann also die volle Ausdehnung der Elektromagnete zur Krafteinwirkung beitragen. Die Verwendung von genau sechs Elektromagneten in einer Antriebseinheit ist dabei besonders vorteilhaft. Sofern nämlich die Abstände der Permanentmagnete an der Transporteinheit korrekt auf die Abstände der Elektromagnete in der Antriebseinheit abgestimmt sind (besonders bevorzugt 1,5-fach), können zu einem bestimmten Zeitpunkt jeweils der erste und vierte bzw. der zweite und fünfte bzw. der dritte und sechste Elektromagnet gemeinsam maximal zur Beschleunigung der Transporteinheit beitragen. Das Anfahren gestaltet sich somit gleichmäßiger, als bei anderen Konfigurationen.

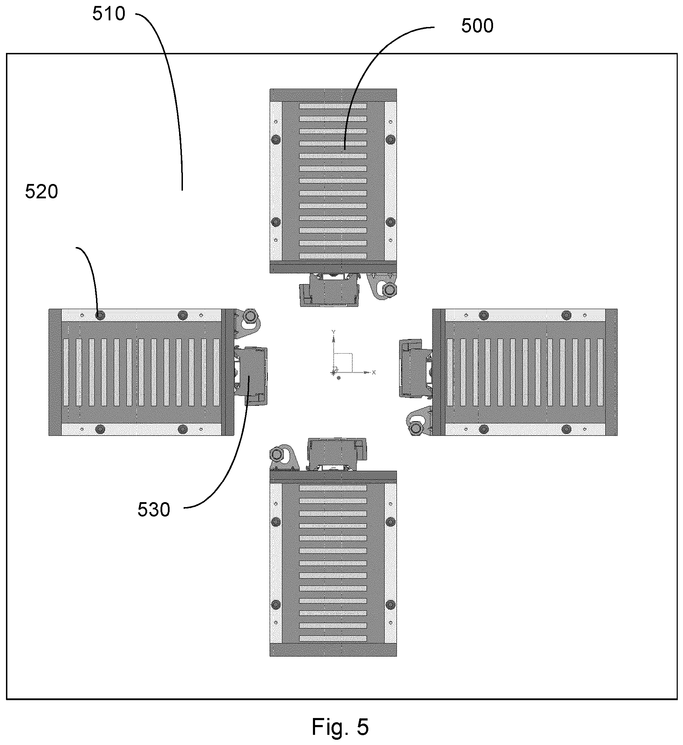

In Fig. 5 ist dargestellt, wie Antriebseinheiten 500 (wie aus Fig. 4) zur Verwendung in einem Flächenmotor angeordnet werden können. Sie können dazu auf einer Grundplatte oder einem Gestell oder einer anderen Konstruktion 510 befestigt oder vergossen werden, z.B. durch Verschraubungen 520. Stecker 530 und Kabel (nicht dargestellt) dienen jeweils zur Stromversorgung der Antriebseinheiten. Die gesamte Anordnung von Fig. 5 verschwindet für den Betrieb des Flächenmotors unter einer Abdeckung bzw. einem Fußboden, auf dem die Transporteinheiten fahren können. Diese Abdeckung bzw. dieser Fußboden muss die Magnetfelder durchlassen.

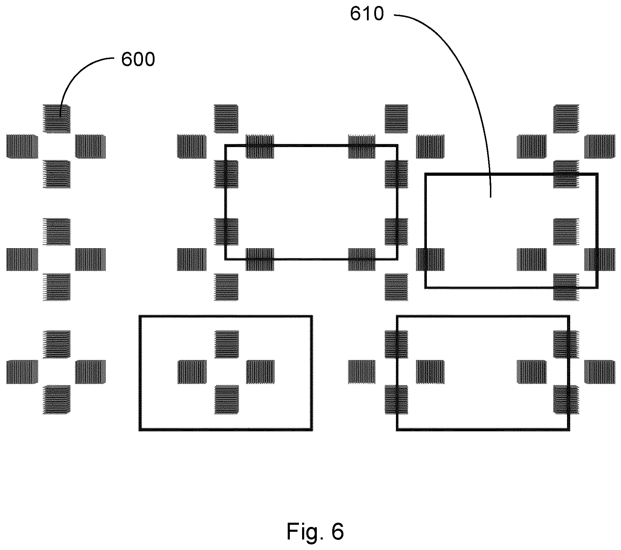

Fig. 6 zeigt, wie eine mögliche Anordnung von Antriebseinheiten 600 in einem Flächenmotor ausgestaltet sein kann, um für Transporteinheiten mit einer schematisch angedeuteten rechteckigen, von Permanentmagneten bedeckten Fläche 610 die vorgesehene Dichte der Elektromagnete bzw. Antriebseinheiten einzuhalten. Die Anordnung ist so gewählt, dass sowohl in x- als auch in y-Richtung stets zwei für diese Richtung als Antrieb dienende Antriebseinheiten von der Fläche 610 überdeckt werden. Teilweise überdeckte Antriebseinheiten werden dabei als entsprechender Bruchteil gezählt.

Da die Fläche 610 rechteckig ist, sind die Abstände in einer Dimension größer als in der anderen. Die Fläche könnte aber auch quadratisch angeordnet sein, wobei entsprechend den Abmessungen die Lineareinheiten mit ihren Elektromagneten positioniert werden würden. Durch die im Vergleich zu anderen Flächenmotoren geringere Dichte der Elektromagnete bzw. Antriebseinheiten 600 können die Kosten (sowohl Anschaffungskosten pro Fläche als auch Betriebskosten) erheblich gesenkt werden. Dennoch ist stets eine optimale Verfahrbarkeit der Transporteinheiten gewährleistet.

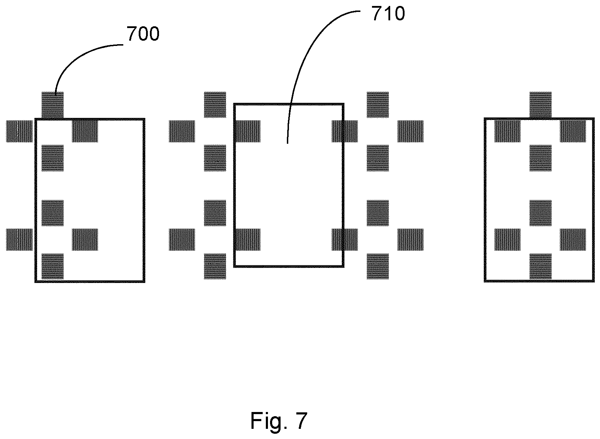

In Fig. 7 ist hingegen zu sehen, wie die Anordnung von Antriebseinheiten 700 aus Fig. 6 nicht auf die um 90° gedrehten Transporteinheiten abgestimmt ist. Zwar sind auch in x-Richtung (in Fig. 7 von links nach rechts) stets mindestens zwei Antriebseinheiten von der rechteckigen, von Permanentmagneten bedeckten Fläche 710 überdeckt, so dass stets eine optimale Beweglichkeit der zugehörigen Transporteinheiten gewährleistet ist. In y-Richtung werden jedoch bei einigen Transporteinheiten deutlich mehr (z.B. drei) Antriebseinheiten überdeckt. Gleichzeitig gibt es Positionen, in denen gar keine Antriebseinheiten (in y-Richtung) überdeckt werden (siehe Transporteinheit 710).

Eine optimale Beweglichkeit der Transporteinheiten kann also nicht mehr gewährleistet werden, da Positionen existieren, von denen aus nur eine Bewegung in einer Dimension möglich ist. Um die Transporteinheit dennoch in y-Richtung bewegen zu können, muss diese zunächst ein Stück in x-Richtung bewegt werden, bis sie sich wieder über Antriebseinheiten befindet, die eine Bewegung in y-Richtung ermöglichen.

Als Konsequenz ergibt sich, dass eine optimale Anordnung für Transporteinheiten mit einer im Wesentlichen rechteckigen von Permanentmagneten überdeckten Fläche nur gegeben ist, wenn sich
a) die Seitenlängen des Rechtecks nur wenig unterscheiden oder
b) keine Drehungen der Transporteinheiten vorgesehen sind.
Der Verzicht auf Drehungen ist in der praktischen Anwendung in z.B. Lagerhallen kein gravierendes Problem, da Verfahrbewegungen typischerweise entlang rechtwinklig angeordneter Wege stattfinden und die Transporteinheiten sich entsprechend auch in rechtwinklig angeordnete Zielpositionen einordnen müssen.

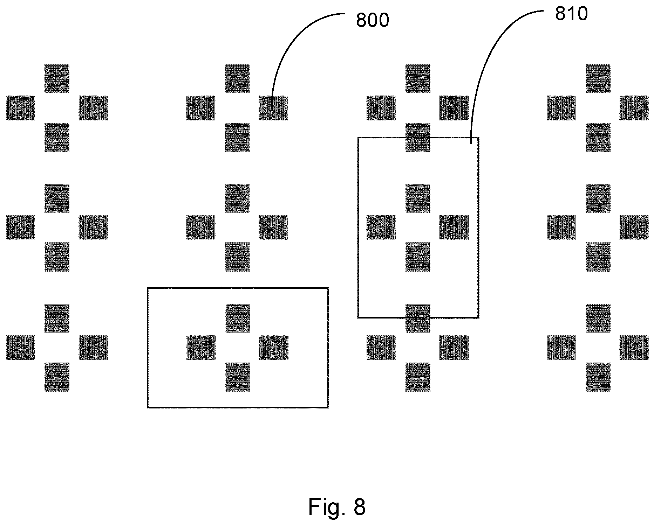

Fig. 8 zeigt eine Anordnung wie in Fig. 6 mit teils gedrehten rechteckigen Transporteinheiten. Auch in dieser Anordnung ist es möglich, die Transporteinheiten 810 in x- und y-Richtung zu bewegen, auch wenn die Abstände der Antriebseinheiten 800 nicht für jede Orientierung der Transporteinheiten ideal ausgelegt sind.

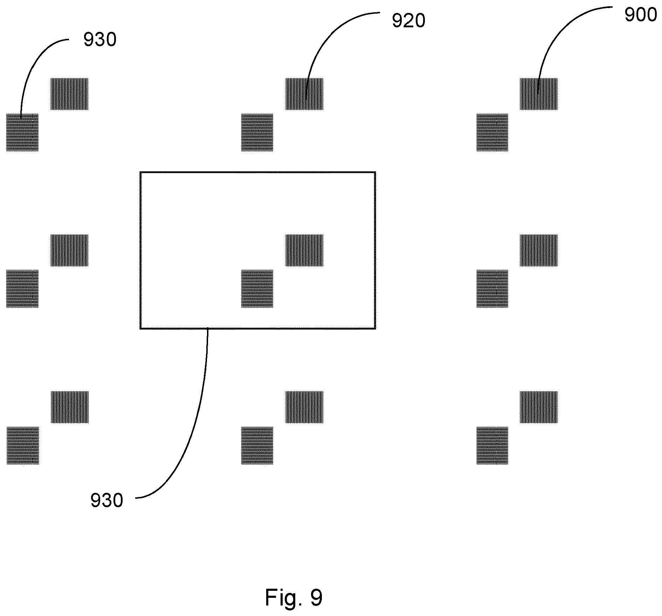

Fig. 9 schließlich zeigt einen Flächenmotor mit der minimalen Anzahl von Antriebseinheiten 900 auf der Fläche. Dabei befinden sich stets genau eine Antriebseinheit 920 für eine Bewegung in x-Richtung und genau eine Antriebseinheit 930 für eine Bewegung in y-Richtung unter der von den Permanentmagneten überdeckten, vorgegebenen Fläche 910 der Transporteinheit.

### Glossar

### Allseitenrad

Bei einem Allseitenrad (auch omnidirektionales Rad, engl. *Omniwheel*) besteht die Lauffläche des Rades aus Rollen, deren Drehachsen im rechten Winkel zur Drehachse des Hauptrades liegen. Dies erlaubt ein reibungsarmes Verschieben des Rades in seitlicher Richtung, also in einer Richtung, die parallel zur Drehachse des Hauptrades liegt (nach https://de.wikipedia.org/wiki/Allseitenrad). Allseitenräder sind z.B. in den Druckschriften US 1,305,535 A und US 3,789,947 A beschrieben.

### Breite

Siehe Länge.

### Elektromagnet

Ein Elektromagnet besteht im einfachsten Fall aus einer Spule mit einem Eisenkern. In der Spule bildet sich infolge eines elektrischen Stromes ein magnetisches Feld, das durch den Eisenkern konzentriert und verstärkt wird. Es sind aber auch aufwändigere Ausführungen möglich, bei denen sich z.B. mehrere in Reihe geschaltete Spulen einen Eisenkern teilen. In jedem Fall sind die Spulen miteinander verbunden und werden gemeinsam angesteuert bzw. bestromt, um ein Magnetfeld zu erzeugen.

### Flächenmotor, Planarmotor

Dabei handelt es sich um eine Verallgemeinerung eines Linearmotors, bei der z.B. der oder die Stator/-en so angeordnet sind, dass eine Bewegung von Mobilteilen (Läufern, Transporteinheiten o.ä.) in zwei Dimensionen erreicht werden kann. Die Bewegung ist insbesondere nicht durch Führungen oder Schienen o.ä. eingeschränkt und folgt somit nicht einem vorgegebenen Fahrweg. Eine Form eines Flächenmotors ist z.B. in WO 2008/148513 A1dargestellt.

### Hall-Sensor

Ein Hall-Sensor (auch Hall-Sonde oder Hall-Geber, nach Edwin Hall) nutzt den Hall-Effekt zur Messung von Magnetfeldern. Hall-Sensoren bestehen aus möglichst dünnen kristallinen dotierten Halbleiter-Schichten, die seitlich zumeist vier Elektroden besitzen. Durch zwei gegenüberliegende Elektroden wird ein Strom eingespeist, die beiden orthogonal dazu liegenden Elektroden dienen der Abnahme der Hall-Spannung. Wird ein solcher Hall-Sensor von einem senkrecht zur Schicht verlaufenden Magnetfeld durchströmt, liefert er eine Ausgangsspannung, die proportional zum (vorzeichenbehafteten) Betrag des Vektorproduktes aus magnetischer Flussdichte und Strom ist. Die Ursache ist die Lorentz-Kraft auf die sich bewegenden Majoritätsladungsträger in der Schicht. Die Ausgangsspannung ist somit proportional zum Strom, zur Ladungsträgerbeweglichkeit und umgekehrt proportional zur Schichtdicke (je dünner die Schicht, desto größer die Ladungsträger-Geschwindigkeit und desto größer ist die Lorentz-Kraft).

Ein Hall-Sensor liefert auch dann ein Signal, wenn das Magnetfeld, in dem er sich befindet, konstant ist. Dies ist der Vorteil im Vergleich zu einer Spule als Magnetfeldsensor (z. B. Induktionsschleife, Rogowski-Spule), die nur die Ableitung des Magnetfeldes nach der Zeit detektiert. Ein weiterer wichtiger Vorteil von Hall-Sensoren ist, dass zu ihrer Realisierung keine ferro- oder ferrimagnetischen Materialien (wie z. B. Nickel oder Eisen) benötigt werden. Damit wird das zu messende Magnetfeld nicht schon dadurch verändert, dass man den Sensor hinein bringt (nach https://de.wikipedia.org/wiki/Hall-Sensor).

### Ladungsträger (Logistik)

Ein Ladungsträger ist in der Logistik ein tragendes Mittel zur Zusammenfassung von Gütern zu einer Ladeeinheit. Zu den Ladungsträgern gehören insbesondere die tragenden Transporthilfsmittel Palette, Container und Fahrzeug (Sattelauflieger). Davon ist die Palette die i.d.R bevorzugte Form. Sie erleichtert den Umschlag der Ladeeinheiten und fördern so die Effizienz und die Geschwindigkeit der Transportkette.

### Länge, Breite

Bei Antriebseinheiten und Transporteinheiten liegt typischerweise eine rechteckige Grundfläche vor. Die größere der Seitenlängen wird dabei als Länge, die kleinere als Breite bezeichnet. Im Falle einer quadratischen Grundfläche entfällt diese Unterscheidung.

### Linearmotor

Ein Linearmotor ist eine elektrische Antriebsmaschine. Anders als die verbreiteten rotierenden Maschinen versetzt ein Linearmotor das von ihm getriebene Objekt (Transporteinheit) nicht in eine drehende Bewegung, sondern verschiebt sie auf geradliniger oder gekurvter Bahn (Translationsbewegung). Die Magnetfelder des angetriebenen Objekts bzw. "Rotors" und die Magnetfelder des Stators ("Fahrweg" "fixen Vorrichtung") werden dabei immer so kombiniert, dass das Objekt ein Wegstück "nach vorne" gezogen wird. Hat das Objekt die Position erreicht, zu der es gezogen wurde, werden andere Magnete entsprechend zu-, um- oder abgeschaltet, so dass das Objekt zum nächsten Magneten hingezogen wird. Dadurch, dass das Objekt mehrere etwas versetzte Magnetfeld-Erzeuger besitzt, befindet sich immer mindestens einer davon gerade "auf halbem Weg", was eine Festlegung der Laufrichtung (vorwärts oder rückwärts) ermöglicht.

### Mecanum-Rad

Das Mecanum-Rad ähnelt den Allseitenrädern. Die Hilfsräder bzw. Rollen sind prinzipiell als ballige Walzen ausgeführt und unter 45° zur Drehachse angeordnet. Durch die Schrägstellung der Hilfsräder ist es einfacher möglich, eine geschlossene Kontur der Lauffläche zu realisieren. Dies ermöglicht einen ähnlich ruhigen Lauf wie bei normalen Rädern. Mecanum-Räder werden z.B. in kleineren Robotern für die Forschung oder zum Bewegen sehr großer Lasten eingesetzt (nach https://de.wikipedia.org/wiki/Omnidirektionaler_Antrieb). Die Druckschrift US 3,876,255 A beschreibt ein Mecanum-Rad.

### Schütz

Das Schütz, auch Schaltschütz, ist ein elektrisch oder elektromagnetisch betätigter Schalter für große elektrische Leistungen und ähnelt einem Relais. Das Schütz kennt zwei Schaltstellungen und schaltet ohne besondere Vorkehrungen im Normalfall monostabil.

Fließt ein Steuerstrom durch die Magnetspule eines elektromechanischen Schützes, zieht das Magnetfeld die mechanischen Kontakte in den aktiven Zustand. Ohne Strom stellt eine Feder den Ruhezustand wieder her, alle Kontakte kehren in ihre Ausgangslage zurück. Die Anschlüsse für Steuerstrom für die Magnetspule sowie die Kontakte für Hilfskreise (falls vorhanden) und zu schaltende Ströme sind im Schütz gegeneinander isoliert ausgeführt: Es gibt keine leitende Verbindung zwischen Steuer- und Schaltkontakten. Im Grunde ist ein Schütz ein Relais mit wesentlich höherer Schaltleistung. Typische Lasten beginnen bei etwa 500 Watt bis hin zu mehreren hundert Kilowatt.

Schütze unterscheiden sich in folgenden Merkmalen von Relais: a) Relais sind für geringere Schaltleistung ausgelegt, sie besitzen meist keine Funkenlöschkammern. b) Die Schaltkontakte von Relais sind einfach unterbrechend, während sie bei Schützen immer doppelt unterbrechend sind. c) Relais benutzen oft Klappanker, Schütze hingegen meist Zuganker zwecks größerer mechanischer Schaltkraft, die für die höheren Schaltleistungen und massiveren Kontakte erforderlich ist. Diese Unterscheidungsmerkmale sind jedoch nicht zwingend, eine klare Abgrenzung ist somit nicht möglich (nach https://de.wikipedia.org/wiki/Sch%C3%BCtz_(Schalter)).

### Transporteinheit

Als Transporteinheit wird ein einzelnes Exemplar der beweglichen Teile eines Flächenmotors bezeichnet. Andere gebräuchliche Bezeichnungen sind Rotor, Mover, Läufer, Shuttle usw.

### Umrichter

Ein Umrichter, auch als Wechselstrom-Umrichter und in Anlehnung an den englischen Begriff auch als AC/AC-Konverter bezeichnet, ist ein Stromrichter, der aus einer Wechselspannung eine in der Frequenz und Amplitude unterschiedliche Wechselspannung generiert. Nicht zu verwechseln sind Umrichter mit Transformatoren, die nur die Amplitude, aber nicht die Frequenz der Spannung verändern können.

Dient die Umrichtung der direkten Versorgung einer elektrischen Maschine wie eines Drehstrommotors im Rahmen der elektrischen Antriebstechnik und wird die Frequenz vom Zustand des Motors abgeleitet, so wird der Umrichter spezifisch als Frequenzumrichter bezeichnet. Er umfasst dann zusätzliche Funktionen zur Motorsteuerung, wie beispielsweise eine Drehzahlmessung und Verfahren zur Kommutierung, um das Drehfeld abhängig vom momentanen Zustand der Maschine anzupassen (nach https://de.wikipedia.org/wiki/Umrichter).

### Bezugszeichen

- 100: Transporteinheit
- 110: rechteckiger Rahmen
- 120: kreuzförmige Fläche
- 130: streifenförmige Permanentmagnete
- 140: quadratische Permanentmagnete
- 150: Querträger
- 160: Kugelrolle
- 170: Aufnahme für Kugelrollen
- 200: Multiaxialrolle
- 210, 215: im Wesentlichen kugelige Rolle
- 220, 225: Drehachse der Rolle
- 230: drehbarer Rahmen
- 240: Mittelachse des drehbaren Rahmens
- 250: Halterung
- 310, 315, 320, 325: Multiaxialrollen
- 340: quadratische Transporteinheit
- 400, 500: Antriebseinheit
- 410: Spule
- 420: gemeinsames Joch
- 430: Kern einer Spule
- 440: zusätzliches Element des Jochs
- 450: gemeinsamer Rahmen der Antriebseinheit
- 460: Befestigungsmittel bzw. Loch
- 510: Grundplatte
- 520: Verschraubung
- 530: Stecker
- 600: Antriebseinheit
- 610: von Permanentmagneten bedeckten Fläche der Transporteinheit
- 700: Antriebseinheit
- 710: rechteckige, von Permanentmagneten bedeckte Fläche einer Transporteinheit
- 800: Antriebseinheit
- 810: von Permanentmagneten bedeckte Fläche einer Transporteinheit
- 900: Antriebseinheit
- 910: von Permanentmagneten bedeckte Fläche einer Transporteinheit
- 920: Antriebseinheit für die x-Richtung
- 930: Antriebseinheit für die y-Richtung

### zitierte Literatur

### zitierte Patentliteratur

EP 1 443 632 A2
US 1305535 A
US 3789947 A
US 3876255 A
US 2012/0300186 A1
WO 2008/148513 A1

## Patentansprüche

1. Flächenmotor mit
1.1 mindestens einer Transporteinheit (100; 340) mit Permanentmagneten (130, 140),
1.1.1 wobei die Permanentmagnete eine vorgegebene Fläche (120; 610; 710) der Transporteinheit überdecken;
1.1.2 wobei die mindestens eine Transporteinheit (100; 340) eine vorgegebene Länge und eine vorgegebene Breite aufweist;
1.2 einer Mehrzahl von Elektromagneten,
1.2.1 wobei die Elektromagnete derart ausgebildet und angeordnet sind, dass sie die Transporteinheit in x- und y-Richtung bewegen können;
1.2.2 wobei jeweils eine feste Anzahl Elektromagnete in Antriebseinheiten (400; 500; 600; 700) gruppiert sind,
1.2.2.1 wobei die feste Anzahl mindestens drei und höchstens achtzehn beträgt;
1.2.2.2 wobei die in einer Antriebseinheit (400; 500; 600; 700) gruppierten Elektromagnete eine Bewegung der Transporteinheit in dieselbe Richtung bewirken;
1.2.2.3 wobei die Antriebseinheiten (400; 500; 600; 700) eine vorgegebene Länge und eine vorgegebene Breite aufweisen;
1.3 dass die kleinere Dimension von Länge oder Breite der Transporteinheit (100; 340) mindestens der Summe aus dem Zweifachen der Länge einer Antriebseinheit und dem Zweifachen der Breite einer Antriebseinheit (400; 500; 600; 700) entspricht;
**dadurch gekennzeichnet**,
1.4 dass die Antriebseinheiten (400; 500; 600; 700) derart über die Fläche des Flächenmotors verteilt angeordnet sind, dass sich stets
1.4.1 genau zwei Antriebseinheiten, die eine Bewegung in x-Richtung bewirken, und
1.4.2 genau zwei Antriebseinheiten, die eine Bewegung in y-Richtung bewirken, unter der von den Permanentmagneten überdeckten, vorgegebenen Fläche (120; 610; 710) der Transporteinheit (100; 340) befinden,
1.4.3 wobei sich teilweise unterhalb der vorgegebenen Fläche befindende Antriebseinheiten als entsprechender Bruchteil gezählt werden.

2. Flächenmotor mit
2.1 mindestens einer Transporteinheit (100; 340) mit Permanentmagneten (130, 140),
2.1.1 wobei die Permanentmagnete eine vorgegebene Fläche (120; 610; 710) der Transporteinheit überdecken;
2.1.2 wobei die mindestens eine Transporteinheit (100; 340) eine vorgegebene Länge und eine vorgegebene Breite aufweist;
2.2 einer Mehrzahl von Elektromagneten,
2.2.1 wobei die Elektromagnete derart ausgebildet und angeordnet sind, dass sie die Transporteinheit in x- und y-Richtung bewegen können;
2.2.2 wobei jeweils eine feste Anzahl Elektromagnete in Antriebseinheiten (400; 500; 600; 700) gruppiert sind,
2.2.2.1 wobei die feste Anzahl mindestens drei und höchstens achtzehn beträgt;
2.2.2.2 wobei die in einer Antriebseinheit (400; 500; 600; 700) gruppierten Elektromagnete eine Bewegung der Transporteinheit in dieselbe Richtung bewirken;
2.2.2.3 wobei die Antriebseinheiten (400; 500; 600; 700) eine vorgegebene Länge und eine vorgegebene Breite aufweisen;
2.3 dass die kleinere Dimension von Länge oder Breite der Transporteinheit (100; 340) mindestens der Summe aus dem Zweifachen der Länge einer Antriebseinheit und dem Zweifachen der Breite einer Antriebseinheit (400; 500; 600; 700) entspricht;
**dadurch gekennzeichnet**,
2.4 dass die Antriebseinheiten (400; 500; 600; 700) derart über die Fläche des Flächenmotors verteilt angeordnet sind, dass sich stets
2.4.1 genau eine Antriebseinheit, die eine Bewegung in x-Richtung bewirkt, und
2.4.2 genau eine Antriebseinheit, die eine Bewegung in y-Richtung bewirkt, unter der von den Permanentmagneten überdeckten, vorgegebenen Fläche (120; 610; 710) der Transporteinheit (100; 340) befindet,
2.4.3 wobei sich teilweise unterhalb der vorgegebenen Fläche befindende Antriebseinheiten als entsprechender Bruchteil gezählt werden.

3. Flächenmotor nach einem der vorhergehenden Ansprüche,
**dadurch gekennzeichnet,**
**dass** die Transporteinheit (100; 340)
- eine quadratische oder rechteckige Grundfläche und/oder
- eine Grundfläche mit den Abmessungen entsprechend einer Norm für Ladungsträger und/oder
- insbesondere eine Grundfläche mit den Abmessungen einer Europalette aufweist.

4. Flächenmotor nach einem der vorhergehenden Ansprüche,
**dadurch gekennzeichnet,**
**dass** die vorgegebene Fläche (120) der Transporteinheit, die von den Permanentmagneten überdeckt wird, kreuzförmig ist.

5. Flächenmotor nach dem unmittelbar vorhergehenden Anspruch,
**dadurch gekennzeichnet,**
**dass** die Permanentmagnete (130) rechteckig sind; wobei
die lange Seite der rechteckigen Permanentmagnete jeweils senkrecht zur Richtung der Arme der kreuzförmigen Fläche (120), die sie überdecken, angeordnet sind.

6. Flächenmotor nach einem der vorhergehenden Ansprüche,
**dadurch gekennzeichnet,**
**dass** die Transporteinheit ein Rad- und/oder Rollensystem aufweist, das Bewegungen in jede Richtung ermöglicht.

7. Flächenmotor nach einem der vorhergehenden Ansprüche,
**dadurch gekennzeichnet,**
7.1 dass der Flächenmotor Sensoren zum Detektieren der Position der Transporteinheit (100; 340) aufweist;
7.1.1 wobei diese Sensoren als Hall-Sensoren oder als induktive Näherungsschalter ausgebildet sind;
7.2 dass insbesondere die Sensoren derart über die Fläche des Flächenmotors verteilt angeordnet sind, dass sich stets mindestens ein Sensor unter der von den Permanentmagneten überdeckten, vorgegebenen Fläche (120; 610; 710) der Transporteinheit befindet;
7.3 dass insbesondere die Sensoren derart über die Fläche des Flächenmotors verteilt angeordnet sind, dass sich stets mindestens zwei Sensoren unter der von den Permanentmagneten überdeckten, vorgegebenen Fläche der Transporteinheit befinden; und
7.4 dass insbesondere die Sensoren derart über die Fläche des Flächenmotors verteilt angeordnet sind, dass sich stets mindestens drei Sensoren unter der von den Permanentmagneten überdeckten, vorgegebenen Fläche der Transporteinheit befinden.

8. Flächenmotor nach einem der vorhergehenden Ansprüche,
**dadurch gekennzeichnet,**
**dass** die feste Anzahl Elektromagnete, die in einer Antriebseinheit (400; 500; 600; 700) gruppiert sind, ein ganzzahliges Vielfaches von drei ist.

9. Flächenmotor nach dem unmittelbar vorhergehenden Anspruch,
**dadurch gekennzeichnet,**
**dass** in einer Antriebseinheit (400; 500; 600; 700) genau sechs Elektromagnete für eine Bewegungsrichtung gruppiert sind.

10. Flächenmotor nach einem der beiden unmittelbar vorhergehenden Ansprüche,
**dadurch gekennzeichnet,**
**dass** die jeweils in einer Antriebseinheit (400; 500; 600; 700) gruppierten Elektromagnete derart geformt und angeordnet sind, dass ihre größte Ausdehnung senkrecht zur jeweiligen Antriebsrichtung orientiert ist, und dass sie in dieser Antriebsrichtung hintereinander liegen.

11. Flächenmotor nach einem der vorhergehenden Ansprüche,
**dadurch gekennzeichnet,**
**dass** die Permanentmagnete (130, 140), die die vorgegebene Fläche der Transporteinheit überdecken, jeweils in einem Abstand voneinander angeordnet sind, der dem 1,25- bis 1,75-fachen, insbesondere dem 1,5-fachen Abstand der Elektromagnete in einer Antriebseinheit (400; 500; 600; 700) entspricht.

12. Flächenmotor nach Anspruch 8,
**dadurch gekennzeichnet,**
12.1 dass in einer Antriebseinheit (400; 500; 600; 700) genau drei, sechs oder neun Elektromagnete gruppiert sind; und
12.2 dass die Länge und/oder die Breite der Transporteinheit (100; 340) mindestens dem Vierfachen der Länge einer Antriebseinheit (400; 500; 600; 700) entspricht.

13. Flächenmotor nach einem der vorhergehenden Ansprüche,
**dadurch gekennzeichnet,**
**dass** der Flächenmotor genau einen Umrichter aufweist, und zwar pro von den Permanentmagneten überdeckten, vorgegebenen Fläche der Transporteinheit.

14. Flächenmotor nach einem der Ansprüche 1 bis 12,
**dadurch gekennzeichnet,**
14.1 dass die Elektromagnete oder Antriebseinheiten (400; 500; 600; 700) in Zeilen und Spalten einer Matrix angeordnet sind;
14.1.1 wobei die Elektromagnete oder Antriebseinheiten (400; 500; 600; 700) abhängig davon, ob sie eine Bewegung einer Transporteinheit (100; 340) in x- oder in y-Richtung bewirken, entweder den Zeilen oder den Spalten der Matrix zugeordnet sind;
14.2 dass der Flächenmotor für jede Zeile und für jede Spalte der Matrix genau einen Umrichter aufweist;
14.3 dass die Umrichter die Elektromagnete oder Antriebseinheiten bestromen,
14.3.1 wobei alle Elektromagnete oder Antriebseinheiten, die derselben Zeile oder Spalte zugeordnet sind, durch denselben Umrichter bestromt werden.

15. Flächenmotor nach einem der Ansprüche 1 bis 12,
**dadurch gekennzeichnet,**
15.1 dass die Elektromagnete oder Antriebseinheiten (400; 500; 600; 700) in Zeilen und Spalten einer Matrix angeordnet sind;
15.2 dass die Elektromagnete oder Antriebseinheiten (400; 500; 600; 700) abhängig davon, ob sie eine Bewegung einer Transporteinheit (100; 340) in x- oder in y-Richtung bewirken, entweder den Zeilen oder den Spalten der Matrix zugeordnet sind; und
15.3 dass der Flächenmotor lediglich für jede Zeile der Matrix genau einen Umrichter aufweist.

16. Verfahren zum Ansteuern eines Flächenmotors, mit den folgenden Schritten:
16.1 ein Flächenmotor nach Anspruch 14 wird bereitgestellt;
16.2 für jede Antriebseinheit werden drei elektronische Schütze und/oder Relais bereitgestellt;
16.3 beim Bewegen der Transporteinheit entlang einer Zeile oder Spalte der Matrix werden die Elektromagnete der jeweils folgenden Antriebseinheit derart zugeschaltet, dass eine Übergabe der Transporteinheit von einer Antriebseinheit zur jeweils folgenden erfolgt.

## Claims

1. Planar motor having
1.1 at least one transport unit (100; 340) with permanent magnets (130, 140),
1.1.1 wherein the permanent magnets cover a predetermined area (120; 610; 710) of the transport unit;
1.1.2 said at least one transport unit (100; 340) having a predetermined length and a predetermined width;
1.2 a plurality of electromagnets,
1.2.1 wherein the electromagnets are formed and arranged such that they are able to move the transport unit in directions x and y;
1.2.2 wherein a fixed number of electromagnets are grouped into drive units (400; 500; 600; 700), respectively,
1.2.2.1 wherein the fixed number is at least three and at most eighteen;
1.2.2.2 wherein the electromagnets grouped in a drive unit (400; 500; 600; 700) cause the transport unit to move in the same direction;
1.2.2.3 wherein the drive units (400; 500; 600; 700) have a predetermined length and a predetermined width;
1.3 the smaller dimension of length or width of the transport unit (100; 340) corresponds to at least the sum of twice the length of a drive unit and twice the width of a drive unit (400; 500; 600; 700);
**characterized in that**
1.4 the drive units (400; 500; 600; 700) are arranged distributed over the surface area of the planar motor in such a way that at all times
1.4.1 exactly two drive units effecting a movement in direction x, and
1.4.2 exactly two drive units effecting a movement in direction y,
are located below the predetermined area (120; 610; 710) of the transport unit (100; 340) covered by the permanent magnets,
1.4.3 wherein drive units partially located below the predetermined area are counted as a corresponding fraction.

2. Planar motor having
2.1 at least one transport unit (100; 340) with permanent magnets (130, 140),
2.1.1 wherein the permanent magnets cover a predetermined area (120; 610; 710) of the transport unit;
2.1.2 said at least one transport unit (100; 340) having a predetermined length and a predetermined width;
2.2 a plurality of electromagnets,
2.2.1 wherein the electromagnets are formed and arranged such that they are able to move the transport unit in directions x and y;
2.2.2 wherein a fixed number of electromagnets are grouped into drive units (400; 500; 600; 700), respectively,
2.2.2.1 wherein the fixed number is at least three and at most eighteen;
2.2.2.2 wherein the electromagnets grouped in a drive unit (400; 500; 600; 700) cause the transport unit to move in the same direction;
2.2.2.3 wherein the drive units (400; 500; 600; 700) have a predetermined length and a predetermined width;
2.3 the smaller dimension of length or width of the transport unit (100; 340) corresponds to at least the sum of twice the length of a drive unit and twice the width of a drive unit (400; 500; 600; 700);
**characterized in that**
2.4 the drive units (400; 500; 600; 700) are arranged distributed over the surface area of the planar motor in such a way that at all times
2.4.1 exactly one drive unit effecting a movement in direction x, and
2.4.2 exactly one drive unit effecting a movement in direction y,
are located below the predetermined area (120; 610; 710) of the transport unit (100; 340) covered by the permanent magnets,
2.4.3 wherein drive units partially located below the predetermined area are counted as a corresponding fraction.

3. Planar motor according to any one of the preceding claims,
**characterized in that**
the transport unit (100; 340) has
- a square or rectangular base and/or
- a base with dimensions corresponding to a standard for load carriers and/or
- in particular a base with the dimensions of a Euro pallet.

4. Planar motor according to any one of the preceding claims,
**characterized in that**
the predetermined area (120) of the transport unit covered by the permanent magnets is cruciform.

5. Planar motor according to the immediately preceding claim,
**characterized in that**
the permanent magnets (130) are rectangular; wherein
the long sides of the rectangular permanent magnets are each arranged perpendicular to the direction of the arms of the cruciform surface (120) which they cover.

6. Planar motor according to any one of the preceding claims,
**characterized in that**
the transport unit has a wheel and/or roller system that allows movement in any direction.

7. Planar motor according to any one of the preceding claims,
**characterized in that**
7.1 the planar motor has Hall sensors for detecting the position of the transport unit (100; 340);
7.2 in particular the Hall sensors are arranged distributed over the surface area of the planar motor in such a way that at least one Hall sensor is located under the predetermined surface (120; 610; 710) of the transport unit covered by the permanent magnets at all times;
7.3 **in that** in particular the Hall sensors are arranged distributed over the surface area of the planar motor in such a way that at least two Hall sensors are located under the predetermined surface of the transport unit covered by the permanent magnets at all times; and
7.4 **in that** in particular the Hall sensors are arranged distributed over the surface area of the planar motor in such a way that at least three Hall sensors are located under the predetermined surface of the transport unit covered by the permanent magnets at all times.

8. Planar motor according to any one of the preceding claims,
**characterized in that**
the fixed number of electromagnets grouped in a drive unit (400; 500; 600; 700) is an integer multiple of three.

9. Planar motor according to the immediately preceding claim,
**characterized in that**
exactly six electromagnets for one direction of movement are grouped in a drive unit (400; 500; 600; 700).

10. Planar motor according to any one of the two immediately preceding claims, **characterized in that**
the respective electromagnets grouped in a drive unit (400; 500; 600; 700) are shaped and arranged in such a way that their largest extension is oriented perpendicularly to the respective drive direction, and that they are arranged one behind the other in this drive direction.

11. Planar motor according to any one of the preceding claims,
**characterized in that**
the permanent magnets (130, 140), which cover the predetermined area of the transport unit, are each arranged at a distance from one another which corresponds to 1.25 to 1.75 times, in particular 1.5 times, the distance between the electromagnets in a drive unit (400; 500; 600; 700).

12. Planar motor according to claim 8,
**characterized in that**
12.1 exactly three, six or nine electromagnets are grouped in a drive unit (400; 500; 600; 700); and
12.2 the length and/or the width of the transport unit (100; 340) is at least four times the length of a drive unit (400; 500; 600; 700).

13. Planar motor according to any one of the preceding claims,
**characterized in that**
the planar motor has exactly one frequency converter per predetermined area of the transport unit covered by the permanent magnets.

14. Planar motor according to any one of the preceding claims 1 to 12,
**characterized in that**
14.1 the electromagnets or drive units (400; 500; 600; 700) are arranged in rows and columns of a matrix;
14.1.1 wherein the electromagnets or drive units (400; 500; 600; 700) are assigned either to the rows or to the columns of the matrix depending on whether they effect a movement of a transport unit (100; 340) in direction x or in direction y;
14.2 the planar motor has exactly one frequency converter for each row and for each column of the matrix;
14.3 the frequency converters energize the electromagnets or drive units,
14.3.1 wherein all electromagnets or drive units assigned to the same row or column are energized by the same frequency converter.

15. Planar motor according to any one of the preceding claims 1 to 12,
**characterized in that**
15.1 the electromagnets or drive units (400; 500; 600; 700) are arranged in rows and columns of a matrix;
15.2 the electromagnets or drive units (400; 500; 600; 700) are assigned either to the rows or to the columns of the matrix depending on whether they effect a movement of a transport unit (100; 340) in direction x or in direction y; and
15.3 the planar motor has merely exactly one frequency converter for each row of the matrix.

16. Method for actuating a planar motor comprising the following steps:
16.1 a planar motor according to claim 19 is provided;
16.2 three electronic contactors and/or relays are provided for each drive unit;
16.3 when moving the transport unit along a row or column of the matrix, the electromagnets of the respective following drive unit are switched in such a way that a transfer of the transport unit from one drive unit to the respective following one takes place.

## Revendications

1. Moteur planaire comprenant
1.1 au moins une unité de transport (100 ; 340) avec des aimants permanents (130, 140),
1.1.1 les aimants permanents recouvrant une surface prédéfinie (120 ; 610 ; 710) de l'unité de transport ;
1.1.2 ladite au moins une unité de transport (100 ; 340) présentant une longueur prédéfinie et une largeur prédéfinie ;
1.2 une pluralité d'électroaimants,
1.2.1 les électroaimants étant formés et agencés de telle sorte qu'ils peuvent déplacer l'unité de transport dans la direction x et dans la direction y ;
1.2.2 un nombre fixe respectif d'électroaimants étant groupé en unités d'entraînement (400 ; 500 ; 600 ; 700),
1.2.2.1 le nombre fixe étant d'au moins trois et d'au plus dix-huit ;
1.2.2.2 les électroaimants groupés dans une unité d'entraînement (400 ; 500 ; 600 ; 700) produisant un déplacement de l'unité de transport dans la même direction ;
1.2.2.3 les unités d'entraînement (400 ; 500 ; 600 ; 700) présentant une longueur prédéfinie et une largeur prédéfinie ;
1.3 la plus petite dimension parmi la longueur et la largeur de l'unité de transport (100 ; 340) correspondant au moins à la somme de deux fois la longueur d'une unité d'entraînement et de deux fois la largeur d'une unité d'entraînement (400 ; 500 ; 600 ; 700) ;
**caractérisé en ce que**
1.4 les unités d'entraînement (400 ; 500 ; 600 ; 700) sont agencées de manière répartie sur la surface du moteur planaire de telle sorte que se trouvent toujours
1.4.1 exactement deux unités d'entraînement qui produisent un déplacement dans la direction x, et
1.4.2 exactement deux unités d'entraînement qui produisent un déplacement dans la direction y,
sous la surface prédéfinie (120 ; 610 ; 710) de l'unité de transport (100 ; 340) recouverte par les aimants permanents,
1.4.3 les unités d'entraînement se trouvant partiellement au-dessous de la surface prédéfinie étant comptées comme fraction correspondante.

2. Moteur planaire comprenant
2.1 au moins une unité de transport (100 ; 340) avec des aimants permanents (130, 140),
2.1.1 les aimants permanents recouvrant une surface prédéfinie (120 ; 610 ; 710) de l'unité de transport ;
2.1.2 ladite au moins une unité de transport (100 ; 340) présentant une longueur prédéfinie et une largeur prédéfinie ;
2.2 une pluralité d'électroaimants,
2.2.1 les électroaimants étant formés et agencés de telle sorte qu'ils peuvent déplacer l'unité de transport dans la direction x et dans la direction y ;
2.2.2 un nombre fixe respectif d'électroaimants étant groupé en unités d'entraînement (400 ; 500 ; 600 ; 700),
2.2.2.1 le nombre fixe étant d'au moins trois et d'au plus dix-huit ;
2.2.2.2 les électroaimants groupés dans une unité d'entraînement (400 ; 500 ; 600 ; 700) produisant un déplacement de l'unité de transport dans la même direction ;
2.2.2.3 les unités d'entraînement (400 ; 500 ; 600 ; 700) présentant une longueur prédéfinie et une largeur prédéfinie ;
2.3 la plus petite dimension parmi la longueur et la largeur de l'unité de transport (100 ; 340) correspondant au moins à la somme de deux fois la longueur d'une unité d'entraînement et de deux fois la largeur d'une unité d'entraînement (400 ; 500 ; 600 ; 700) ;
**caractérisé en ce que**
2.4 les unités d'entraînement (400 ; 500 ; 600 ; 700) sont agencées de manière répartie sur la surface du moteur planaire de telle sorte que se trouvent toujours
2.4.1 exactement une unité d'entraînement qui produit un déplacement dans la direction x, et
2.4.2 exactement une unité d'entraînement qui produit un déplacement dans la direction y, sous la surface prédéfinie (120 ; 610 ; 710) de l'unité de transport (100 ; 340) recouverte par les aimants permanents,
2.4.3 les unités d'entraînement se trouvant partiellement au-dessous de la surface prédéfinie étant comptées comme fraction correspondante.

3. Moteur planaire selon l'une quelconque des revendications précédentes,
**caractérisé en ce que**
l'unité de transport (100 ; 340) présente
- une surface de base carrée ou rectangulaire et/ou
- une surface de base ayant des dimensions correspondant à une norme pour supports de charge et/ou
- en particulier une surface de base ayant les dimensions d'une euro-palette.

4. Moteur planaire selon l'une quelconque des revendications précédentes,
**caractérisé en ce que**
la surface prédéfinie (120) de l'unité de transport qui est recouverte par les aimants permanents est en forme de croix.

5. Moteur planaire selon la revendication immédiatement précédente,
**caractérisé en ce que**
les aimants permanents (130) sont rectangulaires ;
le grand côté des aimants permanents rectangulaires étant agencé respectivement perpendiculairement à la direction des bras de la surface en forme de croix (120) qu'ils recouvrent.

6. Moteur planaire selon l'une quelconque des revendications précédentes,
**caractérisé en ce que**
l'unité de transport présente un système à roues et/ou à roulettes qui permet des déplacements dans toute direction.

7. Moteur planaire selon l'une quelconque des revendications précédentes,
**caractérisé en ce que**
7.1 le moteur planaire présente des capteurs pour détecter la position de l'unité de transport (100 ; 340) ;
7.1.1 ces capteurs étant formés comme capteurs à effet Hall ou comme détecteurs de proximité inductifs ;
7.2 en particulier, les capteurs étant agencés de manière répartie sur la surface du moteur planaire de telle sorte qu'au moins un capteur se trouve toujours sous la surface prédéfinie (120 ; 610 ; 710) de l'unité de transport recouverte par les aimants permanents ;
7.3 en particulier, les capteurs étant agencés de manière répartie sur la surface du moteur planaire de telle sorte qu'au moins deux capteurs se trouvent toujours sous la surface prédéfinie de l'unité de transport recouverte par les aimants permanents ; et
7.4 en particulier, les capteurs étant agencés de manière répartie sur la surface du moteur planaire de telle sorte qu'au moins trois capteurs se trouvent toujours sous la surface prédéfinie de l'unité de transport recouverte par les aimants permanents.

8. Moteur planaire selon l'une quelconque des revendications précédentes,
**caractérisé en ce que**
le nombre fixe d'électroaimants qui sont groupés dans une unité d'entraînement (400 ; 500 ; 600 ; 700) est un multiple entier de trois.

9. Moteur planaire selon la revendication immédiatement précédente, **caractérisé en ce que**
dans une unité d'entraînement (400 ; 500 ; 600 ; 700), exactement six électroaimants sont groupés pour une direction de déplacement.

10. Moteur planaire selon l'une quelconque des deux revendications immédiatement précédentes,
**caractérisé en ce que**
les électroaimants groupés respectivement dans une unité d'entraînement (400 ; 500 ; 600 ; 700) sont formés et agencés de telle sorte que leur plus grande extension est orientée perpendiculairement à la direction d'entraînement respective, et qu'ils sont disposés les uns derrière les autres dans cette direction d'entraînement.

11. Moteur planaire selon l'une quelconque des revendications précédentes,
**caractérisé en ce que**
les aimants permanents (130, 140) qui recouvrent la surface prédéfinie de l'unité de transport sont agencés respectivement à une distance les uns des autres qui correspond à 1,25 à 1,75 fois, en particulier à 1,5 fois, la distance des électroaimants dans une unité d'entraînement (400 ; 500 ; 600 ; 700).

12. Moteur planaire selon la revendication 8,
**caractérisé en ce que**
12.1 exactement trois, six ou neuf électroaimants sont groupés dans une unité d'entraînement (400 ; 500 ; 600 ; 700) ; et
12.2 la longueur et/ou la largeur de l'unité de transport (100 ; 340) correspond au moins à quatre fois la longueur d'une unité d'entraînement (400 ; 500 ; 600 ; 700).

13. Moteur planaire selon l'une quelconque des revendications précédentes,
**caractérisé en ce que**
le moteur planaire présente exactement un convertisseur, à savoir par surface prédéfinie de l'unité de transport recouverte par les aimants permanents.

14. Moteur planaire selon l'une quelconque des revendications 1 à 12,
**caractérisé en ce que**
14.1 les électroaimants ou unités d'entraînement (400 ; 500 ; 600 ; 700) sont agencés en lignes et en colonnes d'une matrice ;
14.1.1 les électroaimants ou unités d'entraînement (400 ; 500 ; 600 ; 700) étant associés soit aux lignes soit aux colonnes de la matrice selon qu'ils produisent un déplacement d'une unité de transport (100 ; 340) dans la direction x ou dans la direction y ;
14.2 le moteur planaire présentant exactement un convertisseur pour chaque ligne et pour chaque colonne de la matrice ;
14.3 les convertisseurs alimentant en courant les électroaimants ou unités d'entraînement,
14.3.1 tous les électroaimants ou unités d'entraînement qui sont associés à la même ligne ou colonne étant alimentés en courant par le même convertisseur.

15. Moteur planaire selon l'une quelconque des revendications 1 à 12,
**caractérisé en ce que**
15.1 les électroaimants ou unités d'entraînement (400 ; 500 ; 600 ; 700) sont agencés en lignes et en colonnes d'une matrice ;
15.2 les électroaimants ou unités d'entraînement (400 ; 500 ; 600 ; 700) sont associés soit aux lignes soit aux colonnes de la matrice selon qu'ils produisent un déplacement d'une unité de transport (100 ; 340) dans la direction x ou dans la direction y ; et
15.3 le moteur planaire présente seulement exactement un convertisseur pour chaque ligne de la matrice.

16. Procédé de commande d'un moteur planaire, comprenant les étapes suivantes :
16.1 un moteur planaire selon la revendication 14 est mis à disposition ;
16.2 trois contacteurs électroniques et/ou relais sont mis à disposition pour chaque unité d'entraînement ;
16.3 lors du déplacement de l'unité de transport le long d'une ligne ou d'une colonne de la matrice, les électroaimants de l'unité d'entraînement respectivement suivante sont activés de telle sorte qu'un transfert de l'unité de transport d'une unité d'entraînement à l'unité respectivement suivante s'effectue.
